# EUROPEAN PATENT APPLICATION

(11) **EP 3 564 481 A1**
(43) Date of publication of application: **06.11.2019**
(21) Application number: 19153973.3
(22) Date of filing: 28.01.2019
(51) Int. Cl.: F01D 5/02, F01D 21/00, G01M 1/36, G01M 1/32, G01M 1/14, F16F 15/32

(54) **MODULAR ROTOR BALANCING**

(30) Priority: 28.02.2018 GB 201803230
(71) Applicant: Rolls-Royce plc, London SW1E 6AT (GB)
(72) Inventor: Harrison, John, Derby, Derbyshire DE24 8BJ (GB)
(74) Representative: Rolls-Royce plc

(57) **Abstract**

A modular method of balancing a rotor assembly comprising two or more rotor sub-assemblies comprises dynamically balancing a set of rotor units each comprising one of the rotor sub-assemblies (52) and in which every other rotor sub-assembly is substituted by a respective simulator (54A, 56A). A respective set (55X, 55Y, 55Z) of balancing weights is applied to one or more of the rotor sub-assembly and simulators of a rotor unit (50A) to achieve dynamic balancing such that each set only corrects unbalance contributed by that rotor sub-assembly or simulator to which it is applied. Each set which is applied to a simulator is transferred to the corresponding sub-assembly. The sub-assemblies are then mated to form the balanced rotor assembly. Excitation of flexible modes of the balanced rotor assembly during its rotation is reduced or avoided.

## Description

### BACKGROUND

Modular methods of balancing rotor assemblies comprising two or more rotor sub-assemblies, and balanced rotor assemblies comprising two or more rotor sub-assemblies, are described, particularly although not exclusively in relation to rotor assemblies for gas turbine engines.

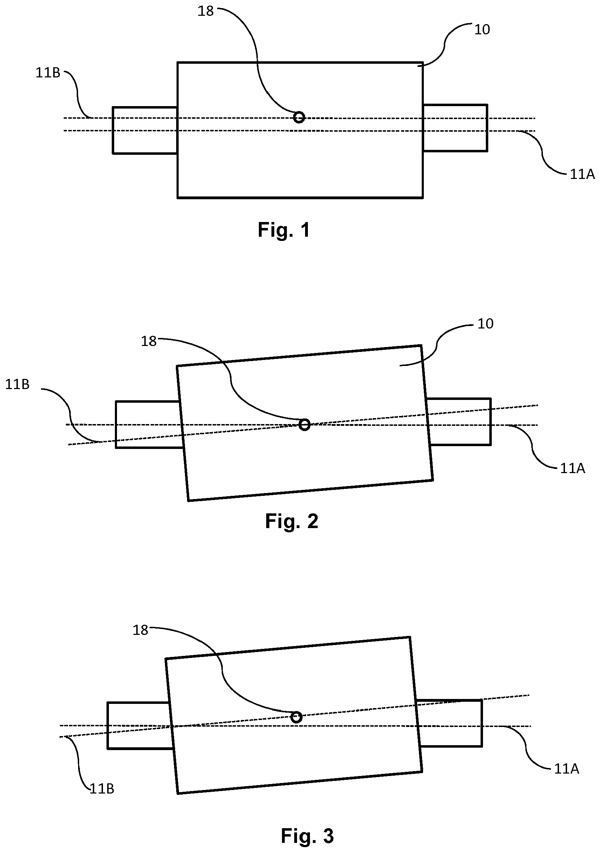

Any unbalance in a rotor is capable of producing vibration and stresses during rotation which vary as the square of the rotational speed of the rotor. Figures 1 to 3 show a rotor 10 having a centre of gravity 18 lying on the rotor's principal inertia axis 11A and mounted for rotation about a rotation axis 11A defined by bearings (not shown) which mount the rotor. In Figure 1 the centre of gravity 18 is offset from the rotation axis 11A, defining a static unbalance. In Figure 2 the centre of gravity 18 lies on the rotation axis 11A, but the principal inertia axis 11B is inclined to the rotation axis 11A such that rotor 10 has a pure couple unbalance. Rotation of the rotor 10 about the axis 11A produces a couple in the plane of Figure 2 which tends to turn the rotor 10 end-over-end. Generally, a rotor will have a dynamic unbalance which is a combination of both a static unbalance and a pure couple unbalance, as shown in Figure 3.

Certain gas turbine engines, particularly modern aero engines, are constructed on a modular basis with the compressor and turbine rotor sub-assemblies of a given rotor assembly being balanced individually rather than balancing the rotor assembly as a whole. When an aero engine is in service, this has the advantage that a compressor or a turbine sub-assembly may be replaced without having to strip the entire rotor. In order to achieve this individual or modular balancing, the compressor and turbine sub-assemblies are each balanced whilst attached to a simulator or dummy sub-assembly that reproduces the bearing span, centre of gravity, mass and principal and diametral moments of inertia of the rotor sub-assembly it replaces. The compressor or rotor sub-assembly is therefore corrected (typically by use of balancing weights) for both its own unbalance and also for influence due to geometric errors on any other mating sub-assembly.

A rotor assembly of a gas turbine engine balanced in this modular way may encounter flexible vibration modes during engine operation leading to unbalance and unacceptable stress and vibration even though the rotor is otherwise dynamically balanced. One example where flexible modes may be encountered is where the rotor has a significant length allowing some bending or flexing of the rotor axially.

### BRIEF SUMMARY

According to an example, a modular method of forming a dynamically balanced a rotor assembly comprising n rotor sub-assemblies, wherein n ≥ 2, comprises the steps of:
(i) forming a rotor unit consisting of one of the rotor sub-assemblies and n-1 simulators each of which corresponds to and substitutes a respective rotor sub-assembly;
(ii) dynamically balancing the rotor unit by applying a respective set of one or more balancing weights to one or more of the rotor sub-assembly and the simulators of the rotor unit so that a set applied to a given rotor sub-assembly or simulator corrects unbalance contributed to the rotor unit by that rotor sub-assembly or simulator only;
(iii) noting the radial and azimuthal positions of any balancing weight applied to any simulator in step (ii) and the simulator to which it is applied;
(iv) repeating steps (i) to (iii) for n-1 other rotor units each comprising a different rotor sub-assembly and in which each of the other n-1 rotor sub-assemblies of the rotor is substituted by a respective simulator;
(v) for each balancing weight applied to a simulator in step (ii), applying a balancing weight to the corresponding rotor sub-assembly, the balancing weight having the same weight and being applied to the corresponding rotor sub-assembly at the same axial, radial and azimuthal positions as the balancing weight applied to the simulator; and
(vi) mating the n rotor sub-assemblies to produce the dynamically balanced rotor assembly.

The number of rotor sub-assemblies n may be three or more, with n simulators being provided each of which corresponds to a respective rotor sub-assembly, the n rotor units being formed and dynamically balanced sequentially and balancing weights applied to any simulator in step (ii) being removed prior to dynamic balancing of any subsequent rotor unit.

The number of rotor sub-assemblies may be three or more, with n(n-1) simulators being provided and each rotor sub-assembly having n-1 identical corresponding simulators. The n rotor units may be dynamically balanced substantially simultaneously.

Step (v) may be performed by transferring any balancing weight applied to a simulator in step (ii) to the corresponding rotor sub-assembly and locating the balancing weight on the corresponding rotor sub-assembly at the same axial, radial and azimuthal positions at which it was applied to the simulator.

The number of rotor sub-assemblies may be two and the method may comprise the steps of:
(i) providing first and second simulators corresponding to the first and second rotor sub-assemblies respectively;
(ii) mating the first rotor sub-assembly with the second simulator to form a first rotor unit;
(iii) mating the first simulator with the second rotor sub-assembly to form a second rotor unit;
(iii) dynamically balancing the first rotor unit by applying a respective set of one or more balancing weights to at least one of the first rotor sub-assembly and the second simulator so that any set applied to a given rotor sub-assembly or simulator corrects unbalance contributed to the first rotor unit by that rotor sub-assembly or simulator only;
(iv) dynamically balancing the second rotor unit by applying a respective set of one or more balancing weights to at least one of the first simulator and the second rotor sub-assembly so that any set applied to a given rotor sub-assembly or simulator corrects unbalance contributed to the first rotor unit by that rotor sub-assembly or simulator only;
(v) transferring each balancing weight applied to the second simulator in step (iii) to the second rotor sub-assembly at the same axial, radial and azimuthal positions at it was applied to the second simulator, or alternatively for each balancing weight applied to the second simulator in step (iii) applying a further balancing weight to the second rotor sub-assembly each further balancing weight having the same weight and being applied at the same axial, radial and azimuthal positions on the second rotor sub-assembly as the corresponding balancing weight on the second simulator;
(vi) transferring each balancing weight applied to the first simulator in step (iv) to the first rotor sub-assembly at the same axial, radial and azimuthal positions at it was applied to the first simulator, or alternatively for each balancing weight applied to the second simulator in step (iv) applying a further balancing weight to the first rotor sub-assembly each further balancing weight having the same weight and being applied at the same axial, radial and azimuthal positions on the first rotor sub-assembly as the corresponding balancing weight on the first simulator; and
(vi) mating the first and second rotor sub-assemblies each including any balancing weights applied or transferred thereto in steps (iii) to (vi) thereto to produce a dynamically balanced rotor assembly.

The first rotor sub-assembly may be a compressor sub-assembly and the second rotor sub-assembly may be a turbine sub-assembly.

According to an example, a dynamically balanced rotor assembly comprises two or more rotor sub-assemblies, wherein at least one of the two or more of the rotor sub-assemblies carries a respective set of one or more balancing weights and any given set corrects dynamic unbalance contributed to the unbalanced rotor assembly by the corresponding rotor sub-assembly only.

According to an example, a gas turbine engine or geared turbofan engine comprises a dynamically balanced rotor assembly as described herein.

Except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

- Figure 4: shows a rotor assembly comprising compressor and turbine subassemblies mounted for rotation about a rotation axis;
- Figures 5 to 7: illustrate steps in the modular balancing of the Figure 2 rotor assembly by a known method;
- Figures 8 to 10: illustrate steps in the modular balancing of the Figure 2 rotor assembly by a method according to an example;
- Figures 11 to 14: illustrate steps in the formation of a modularly balanced rotor assembly comprising three rotor sub-assemblies by a method according to an example;
- Figure 15: shows a longitudinal section through a gas turbine engine having a rotor to which the described method may be applied; and
- Figure 16: shows steps in a balancing method according to an example.

### DETAILED DESCRIPTION

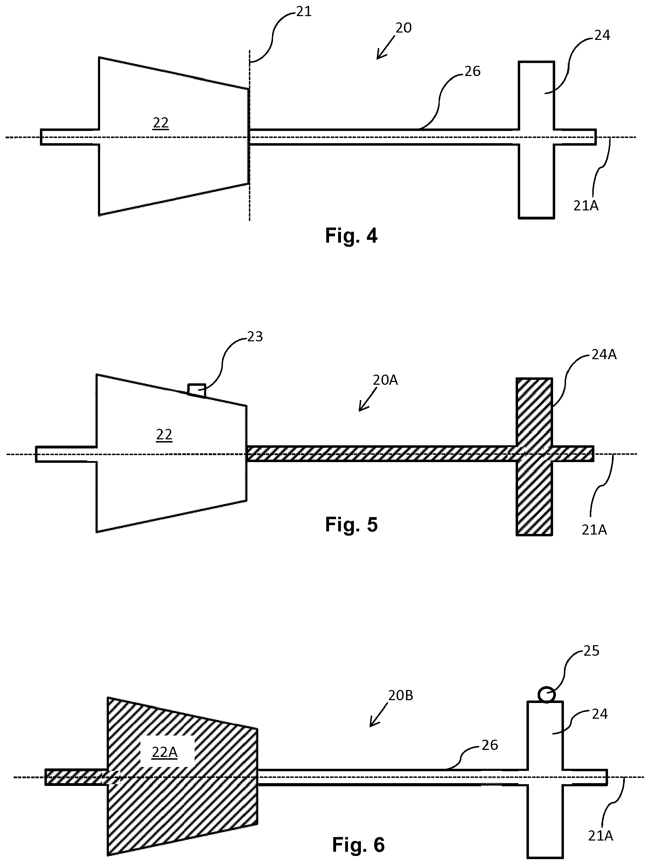

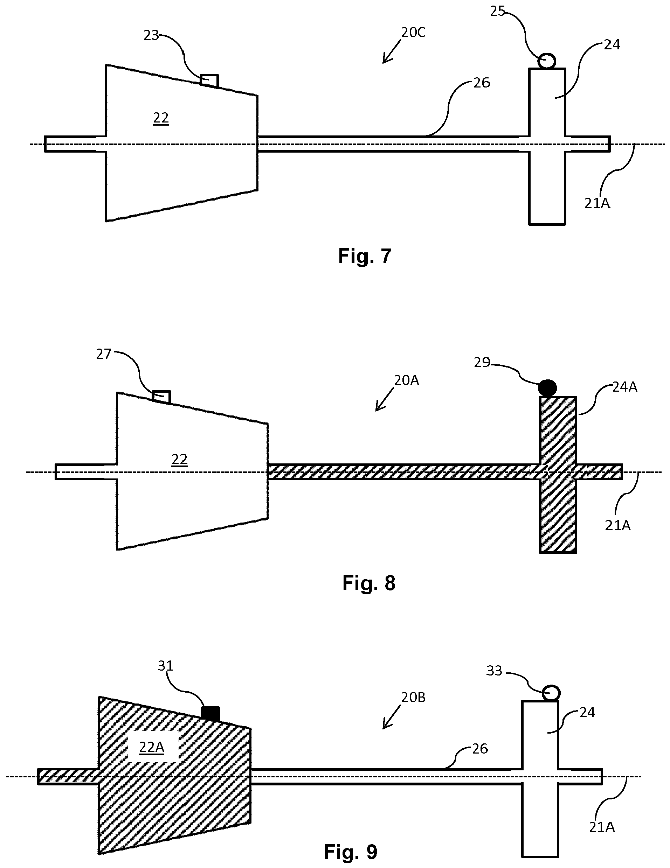

Figure 4 shows an unbalanced rotor assembly 20 for a gas turbine engine, the rotor assembly 20 comprising compressor 22 and turbine 24 sub-assemblies mounted for rotation about a rotation axis 21A. In general both the compressor 22 and the turbine 24 sub-assemblies are dynamically unbalanced. In a known modular balancing method, the turbine assembly 24 is first replaced by a turbine simulator 24A to form a first rotor unit 20A as indicated in Figure 5. One or more balancing weights 23 are applied to the compressor sub-assembly 22 to correct for unbalance in the compressor sub-assembly 22 and unbalance caused by mating with the turbine simulator 24A to produce a dynamically balanced first rotor unit 20A. (Note that although only a single balancing weight 23 is depicted in Figure 5, at least two such weights are applied to the compressor 22, each at a respective axial position, in order to provide two-plane balancing of the rotor unit 20A). The turbine sub-assembly 24 is then mated with a compressor simulator 22A to form a second rotor unit 20B as indicated in Figure 6. One or more balancing weights 25 are applied to the turbine sub-assembly 24 to correct for unbalance in the turbine sub-assembly 24 and unbalance caused by mating with the compressor simulator 22A to produce a dynamically balanced second rotor unit 20B. (Note that although only a single balancing weight 25 is depicted in Figure 6, at least two such weights are applied to the compressor sub-assembly 22, each at a respective axial position, in order to provide two-plane balancing of the rotor unit 20B). The rotor units 20A, 20B are thus balanced by two-plane balancing, the two-planes in each case coinciding axially with the compressor and turbine sub-assemblies 22, 24 respectively. As shown in Figure 7, the individually (modularly) balanced compressor and turbine sub-assemblies 22, 24 are then mated to form a finished dynamically balanced rotor 20C. However the balanced rotor 20C will not remain balanced in operation if the shaft 26 of the turbine assembly 24 is somewhat flexible, for example due to its length, because some of the unbalance errors in the rotor 20C are corrected away from the planes in which they arise. Some of the correction provided by balancing weight(s) 23 provides correction for unbalance caused by the turbine sub-assembly 24. Similarly, some of the correction provided by balancing weight(s) 25 provides correction for unbalance caused by the compressor sub-assembly 22.

Figures 8 to 10 indicate steps in a modular balancing method according to an example by which the unbalanced rotor 20 of Figure 4 is dynamically balanced such that the excitation of flexible modes in the rotor 20 is reduced or eliminated during its rotation. In a first step, indicated in Figure 8, the compressor sub-assembly 22 is mated with a turbine simulator 24A to form a first rotor unit 20A and balancing weight(s) 27 are applied to the compressor sub-assembly 22 to correct for unbalance in that sub-assembly. Balancing weight(s) 29 are applied to the turbine simulator 24A to correct for unbalance in the rotor unit 20A caused by the turbine simulator 24A. Unbalance arising in the plane of the turbine simulator 24A is therefore corrected substantially in the plane in which it is located. The turbine sub-assembly 24 is then mated with a compressor simulator 22A to form a second rotor unit 20B (Figure 9). Balancing weight(s) 33 are applied to the turbine sub-assembly 24 to correct for unbalance caused by the turbine sub-assembly 24 and balancing weight(s) 31 are applied to the compressor simulator 22A to correct unbalance contributed to the rotor unit 20B by the compressor simulator 22A. Unbalance caused by the compressor simulator 22A is therefore corrected substantially in the plane in which it is located. Rotor units 20A, 20B are thus balanced by two-plane balancing. In the case of rotor unit 20A one plane coincides axially with the compressor sub-assembly 22 and the other coincides with the simulator 24A. In the case of rotor unit 20B, one plane coincides axially with the simulator 22A and the other coincides with the turbine sub-assembly 24.

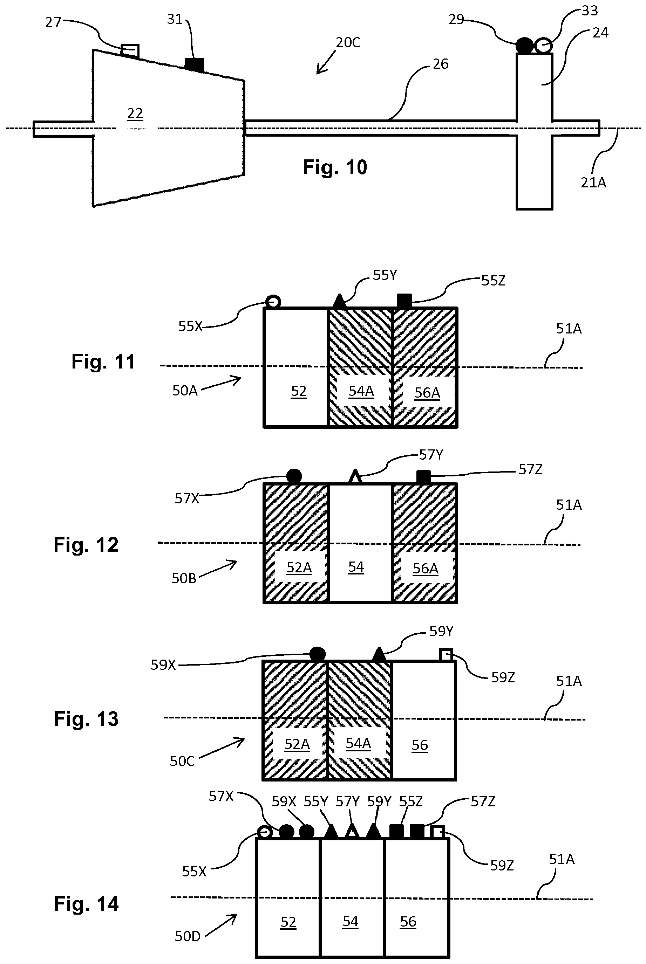

The balancing weights 29, 31 applied to the simulators 22A, 24A respectively are then transferred to the corresponding sub-assemblies 24A, 22A respectively at the same axial, radial and azimuthal positions at which they were located on the simulators 24A, 22A. The compressor and turbine sub-assemblies are then mated to produce the finished dynamically balanced rotor 20C (Figure 10). The method thus provides balancing of the rotor 20 by a technique which is both modular and which also avoids or reduces unbalance caused by excitation of flexible modes of the rotor 20. This is because sources of unbalance in the unbalanced rotor 20 are corrected substantially in the plane in which they arise (or at least on the rotor sub-assemblies which give rise to the unbalances). Unbalance contributed by a rotor sub-assembly is corrected by balancing weights applied to that rotor sub-assembly.

As an alternative to transferring balancing weights from a given simulator to the corresponding rotor sub-assembly, further weights could be applied to the rotor sub-assembly, each further weight having the same weight as a corresponding balancing weight on the simulator and being applied at the same axial, radial and azimuthal positions on the corresponding rotor sub-assembly at which the corresponding balancing weight is located on the simulator.

Figures 11 to 14 illustrate steps in the formation of a modularly-balanced rotor assembly 50D comprising first, second and third rotor sub-assemblies 52, 54, 56 by a method according to an example. The rotor sub-assemblies 52, 54, 56 could for example be a stub-shaft, a compressor and a turbine respectively of a rotor assembly for a gas turbine engine. Three simulators 52A, 54A, 56A are provided corresponding to the three rotor-assemblies 52, 54, 56 respectively. As shown in Figures 12, 13 and 14, first, second and third rotor units 50A, 50B, 50C are formed each comprising one of the rotor sub-assemblies 52, 54, 56 with each of the remaining two rotor sub-assemblies being substituted by a pair of simulators 54A 56A, 52A 56A and 52A 54A respectively. The first rotor unit 50A is dynamically balanced by applying sets 55X, 55Y, 55Z of balancing weights to rotor sub-assembly 52 and simulators 54A, 56A respectively, as shown in Figure 11. (A set of balancing weights could be a single balancing weight). Each set 55X, 55Y, 55Z of balancing weights is applied to a respective rotor sub-assembly or simulator 52, 54A, 56A and corrects for unbalance contributed to the unbalanced rotor unit 50A by that rotor sub-assembly or simulator only. Similarly the second rotor unit 50B is dynamically balanced by applying sets 57X, 57Y, 57Z of balancing weights to simulator 52A, rotor sub-assembly 54 and simulator 56A respectively (Figure 12), and the third rotor unit 50C is dynamically balanced by applying sets 59X, 59Y, 59Z of balancing weights to simulators 52A, 54A and rotor sub-assembly 56 respectively (Figure 13).

Every set of balancing weights applied a to simulator is then transferred to the corresponding rotor sub-assembly with an individual weight of a set being applied at the same axial, radial and azimuthal positions on the rotor sub-assembly at it was applied on the corresponding simulator. Referring to Figure 14, rotor sub-assemblies 52, 54, 56 are combined and sets 57X, 59X of balancing weights are transferred to rotor sub-assembly 52, sets 55Y, 59Y are transferred to rotor sub-assembly 54 and sets 55Z, 57Z are transferred to rotor sub-assembly 56, with the axial, radial and azimuthal positions of all individual balancing weights being preserved. The final, modularly and dynamically balanced rotor 50D therefore comprises balancing weights each of which corrects for unbalance contributed to the unbalanced rotor arising in the plane in which the unbalance originates, or at least on the rotor sub-assembly giving rise to the unbalance.

As an alternative to transferring a given set of weights from a simulator to the corresponding compressor, a further (different) set of balancing weights could be applied to a rotor sub-assembly, each of the further weights having the same weight as a corresponding balancing weight in the set applied to the simulator, and being applied to the rotor sub-assembly at the same axial, radial and azimuthal positions on the rotor sub-assembly as the corresponding balancing weight on the simulator.

If three simulators 52A, 54A, 56A are provided, then the rotor units 50A, 50B, 50B must be formed and balanced serially in time, i.e. one after the other. If two simulators are provided for each rotor sub-assembly then then rotor units 50A, 50B, 50C may be formed and balanced simultaneously or substantially simultaneously, i.e. over respective time periods which overlap in time. In Figures 11 and 13, adjacent pairs of simulators 54A 56A and 52A 54A may each be replaced by a respective, single, combined simulator which substitutes for a pair of rotor sub-assemblies 54 56, 52 54.

It should be noted that the unbalanced rotor in a given case may never actually be formed. The method may start with the formation of rotor units (such as 50A-C as shown in Figures 11-13 respectively) which are then dynamically balanced. The method described may therefore be regarded either as method of modularly balancing an unbalanced rotor to form a dynamically balanced rotor, or a method of forming a balanced rotor.

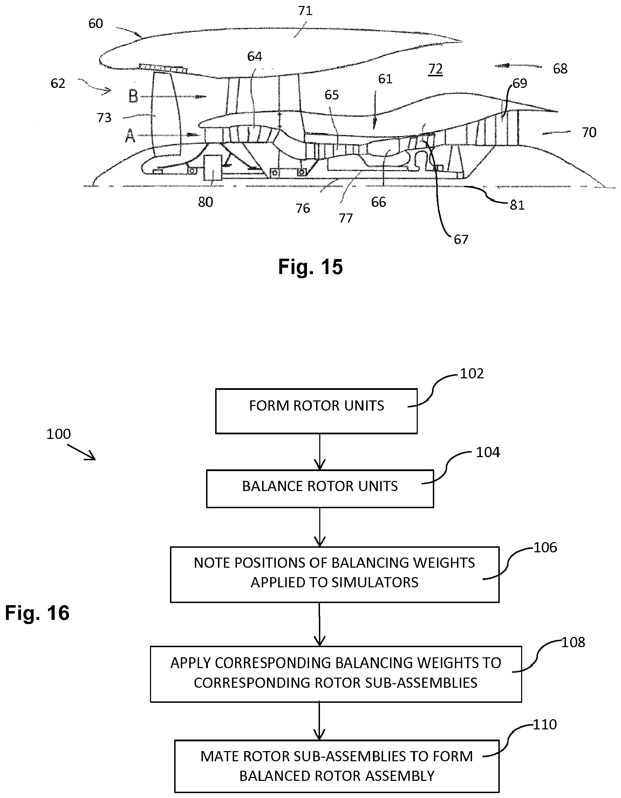

Figure 15 illustrates a gas turbine engine 60 which may comprise a rotor assembly balanced by the method described above. The engine 60 has a principal rotational axis 81. The engine 60 comprises an air intake 62 and a propulsive fan 73 that generates two airflows: a core airflow A and a bypass airflow B. The gas turbine engine 60 comprises a core 61 that receives the core airflow A. The engine core 61 comprises, in axial flow series, a low pressure compressor 64, a high-pressure compressor 65, combustion equipment 66, a high-pressure turbine 67, a low pressure turbine 69 and a core exhaust nozzle 70. A nacelle 71 surrounds the gas turbine engine 60 and defines a bypass duct 72 and a bypass exhaust nozzle 68. The bypass airflow B flows through the bypass duct 72. The fan 73 is attached to and driven by the low pressure turbine 69 via a shaft 76 and an epicyclic gearbox 80.

In use, the core airflow A is accelerated and compressed by the low pressure compressor 64 and directed into the high pressure compressor 65 where further compression takes place. The compressed air exhausted from the high pressure compressor 65 is directed into the combustion equipment 66 where it is mixed with fuel and the mixture is combusted. The resultant hot combustion products then expand through, and thereby drive, the high pressure and low pressure turbines 67, 69 before being exhausted through the nozzle 70 to provide some propulsive thrust. The high pressure turbine 67 drives the high pressure compressor 65 by a suitable interconnecting shaft 77. The fan 73 generally provides the majority of the propulsive thrust. The epicyclic gearbox 80 is a reduction gearbox.

Note that the terms "low pressure turbine" and "low pressure compressor" as used herein may be taken to mean the lowest pressure turbine stages and lowest pressure compressor stages (i.e. not including the fan 73) respectively and/or the turbine and compressor stages that are connected together by the interconnecting shaft 76 with the lowest rotational speed in the engine (i.e. not including the gearbox output shaft that drives the fan 73). In some literature, the "low pressure turbine" and "low pressure compressor" referred to herein may alternatively be known as the "intermediate pressure turbine" and "intermediate pressure compressor". Where such alternative nomenclature is used, the fan 73 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 15 has a split flow nozzle 70, 72 meaning that the flow through the bypass duct 72 has its own nozzle that is separate to and radially outside the core engine nozzle 70. However, this is not limiting, and any aspect of the present disclosure may also apply to engines in which the flow through the bypass duct 72 and the flow through the core 71 are mixed, or combined, before (or upstream of) a single nozzle, which may be referred to as a mixed flow nozzle. One or both nozzles (whether mixed or split flow) may have a fixed or variable area. Whilst the foregoing description relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 60 may not comprise a gearbox 80.

Figure 16 is a flow-chart illustrating steps in the balancing or rotor-assembly formation method 100 used to produce the rotor assemblies 20C, 50D of Figures 10 and 14 respectively. Rotor units are formed (102) each consisting of one sub-assembly of the rotor-assembly to be formed or balanced and with all other sub-assemblies each replaced by a respective simulator. A rotor unit is independently balanced (104) by applying a respective set of one or more balancing weights to at least one sub-assembly or simulator of the rotor unit. The axial, radial and azimuthal positions of each balancing weight applied to a simulator are noted (106) along with the simulator to which it was applied. All possible rotor-units are independently balanced similarly. For each balancing weight applied to a simulator, another balancing weight of the same weight is applied to the corresponding rotor sub-assembly at the same axial, radial and azimuthal positions at which the balancing weight is attached to the simulator (108). The sub-assemblies are then mated to form the balanced rotor assembly (110).

The invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A modular method of forming a dynamically balanced a rotor assembly (20C; 50D) comprising n rotor sub-assemblies, wherein n ≥ 2, the method comprising the steps of:
(i) forming a rotor unit (20A; 50A) consisting of one (22; 52) of the rotor sub-assemblies and n-1 simulators (24A; 54A, 56A) each of which corresponds to and substitutes a respective rotor sub-assembly;
(ii) dynamically balancing the rotor unit by applying a respective set (27, 29; 55X, 55Y, 55Z) of one or more balancing weights to one or more of the rotor sub-assembly and the simulators of the rotor unit so that a set applied to a given rotor sub-assembly or simulator corrects unbalance contributed to the rotor unit by that rotor sub-assembly or simulator only;
(iii) noting the radial and azimuthal positions of any balancing weight applied to any simulator in step (ii) and the simulator to which it is applied;
(iv) repeating steps (i) to (iii) for n-1 other rotor units (20B; 50B, 50C) each comprising a different rotor sub-assembly (24; 54, 56) and in which each of the other n-1 rotor sub-assemblies of the rotor is substituted by a respective simulator (22A; 52A, 56A, 52A, 54A)
(v) for each balancing weight applied to a simulator in step (ii), applying a balancing weight to the corresponding rotor sub-assembly, the balancing weight having the same weight and being applied to the corresponding rotor sub-assembly at the same axial, radial and azimuthal positions as the balancing weight applied to the simulator; and
(vi) mating the n rotor sub-assemblies to produce the dynamically balanced rotor assembly (20C; 50D).

2. A method according to claim 1 wherein
(a) n ≥ 3;
(b) n simulators are provided each of which corresponds to a respective rotor sub-assembly;
(c) the n rotor units are formed and dynamically balanced sequentially; and
(d) balancing weights applied to any simulator in step (ii) are removed prior to dynamic balancing of any subsequent rotor unit.

3. A method according to claim 1 wherein:
(a) n ≥ 3;
(b) n(n-1) simulators are provided wherein each rotor sub-assembly has n-1 identical corresponding simulators.

4. A method according to claim 3 wherein the n rotor units are dynamically balanced substantially simultaneously.

5. A method according to any preceding claim wherein step (v) is performed by transferring any balancing weight applied to a simulator in step (ii) to the corresponding rotor sub-assembly and locating the balancing weight on the corresponding rotor sub-assembly at the same axial, radial and azimuthal positions at which it was applied to the simulator.

6. A method according to claim 1 wherein n = 2 and comprising the steps of:
(i) providing first and second simulators corresponding to the first and second rotor sub-assemblies respectively;
(ii) mating the first rotor sub-assembly with the second simulator to form a first rotor unit;
(iii) mating the first simulator with the second rotor sub-assembly to form a second rotor unit;
(iii) dynamically balancing the first rotor unit by applying a respective set of one or more balancing weights to at least one of the first rotor sub-assembly and the second simulator so that any set applied to a given rotor sub-assembly or simulator corrects unbalance contributed to the first rotor unit by that rotor sub-assembly or simulator only;
(iv) dynamically balancing the second rotor unit by applying a respective set of one or more balancing weights to at least one of the first simulator and the second rotor sub-assembly so that any set applied to a given rotor sub-assembly or simulator corrects unbalance contributed to the first rotor unit by that rotor sub-assembly or simulator only;
(v) transferring each balancing weight applied to the second simulator in step (iii) to the second rotor sub-assembly at the same axial, radial and azimuthal positions at it was applied to the second simulator, or alternatively for each balancing weight applied to the second simulator in step (iii) applying a further balancing weight to the second rotor sub-assembly each further balancing weight having the same weight and being applied at the same axial, radial and azimuthal positions on the second rotor sub-assembly as the corresponding balancing weight on the second simulator;
(vi) transferring each balancing weight applied to the first simulator in step (iv) to the first rotor sub-assembly at the same axial, radial and azimuthal positions at it was applied to the first simulator, or alternatively for each balancing weight applied to the second simulator in step (iv) applying a further balancing weight to the first rotor sub-assembly each further balancing weight having the same weight and being applied at the same axial, radial and azimuthal positions on the first rotor sub-assembly as the corresponding balancing weight on the first simulator; and
(vi) mating the first and second rotor sub-assemblies each including any balancing weights applied or transferred thereto in steps (iii) to (vi) thereto to produce a dynamically balanced rotor assembly.

7. A method according to claim 6 wherein the first rotor sub-assembly is a compressor sub-assembly and the second rotor sub-assembly is a turbine sub-assembly.

8. A dynamically balanced rotor assembly (20C; 50D) comprising two or more rotor sub-assemblies (22, 24; 52, 54, 56), wherein at least one of the two or more of the rotor sub-assemblies carries a respective set (27, 31, 29, 33; 55X, 57X, 59X, 55Y, 57Y, 59Y, 55Z, 57Z, 59Z) of one or more balancing weights and any given set corrects dynamic unbalance contributed to the unbalanced rotor assembly by the corresponding rotor sub-assembly only.

9. A gas turbine engine (60) or geared turbofan engine comprising a dynamically balanced rotor assembly according to claim 8.
